# FASCICULE DE BREVET EUROPEEN

(11) **EP 1 439 237 B1**
(45) Date de publication et mention de la délivrance du brevet: **18.07.2007**
(21) Numéro de dépôt: 03380210.9
(22) Date de dépôt: 24.09.2003
(51) Int. Cl.: C22B 7/00, C21B 3/04

(54) **Procédé de recyclage de poussière d'aciérie et produit obtenu avec ce procédé**
Verwertung von Elektrolichtbogenofenstaüben der Stahlerzeugung und so hergestellte Produkt
Recycling process for electric arc furnace dust and product obtained therefrom

(30) Priorité: 09.01.2003 ES 200300044
(43) Date de publication de la demande: 21.07.2004
(73) Titulaire: Oneder, S.A., 20720 Azkoitia Guipuzcoa (ES); Ugarte Bilbao, Alberto, 20720 Azkoitia Guipuzcoa (ES)
(72) Inventeur: Ugarte Bilbao, Alberto, 20720 Azkoitia (Gipuzkoa) (ES)
(74) Mandataire: Urizar Barandiaran, Miguel Angel

(56) Documents cités:
- EP-A- 1 199 373
- GB-A- 1 487 786
- US-A- 3 948 638
- US-A- 4 004 918
- PATENT ABSTRACTS OF JAPAN vol. 001, no. 013 (C-005), 22 mars 1977 (1977-03-22) & JP 51 129802 A (NIPPON JIRYOKU SENKO KK), 11 novembre 1976 (1976-11-11)
- GEISELER J ET AL: "METALLURGISCHE VERWERTUNG VON STAUBEN UND SCHLAMMEN DER STAHLINDUSTRIE" STAHL UND EISEN, VERLAG STAHLEISEN GMBH. DUSSELDORF, DE, vol. 109, no. 7, 10 avril 1989 (1989-04-10), pages 359-365, XP000023544 ISSN: 0340-4803
- GEISELER J ET AL: "METALLURGICAL UTILIZATION OF DUST AND SLUDGE IN THE STEEL INDUSTRY" STAHL UND EISEN, VERLAG STAHLEISEN GMBH. DUSSELDORF, DE, vol. 109, no. 7, 10 avril 1989 (1989-04-10), page 81 XP000023543 ISSN: 0340-4803
- "STEELMAKING DUST AND SLUDGES" MANAGEMENT OF STEEL INDUSTRY BY-PRODUCTS AND WASTE, XX, XX, 1 octobre 1987 (1987-10-01), pages 55-69, XP002045281
- KAAS W ET AL: "Erzeugung und Verarbeitung armierter Filterstaubbriketts aus der Edelstahlerzeugung" STAHL UND EISEN, VERLAG STAHLEISEN GMBH. DUSSELDORF, DE, vol. 7, no. 104, 2 avril 1984 (1984-04-02), pages 357-362, XP002079087 ISSN: 0340-4803

## Description

Actuellement la destination des poussières provenant des systèmes de captage de fumée des aciéries à arc électrique est celui de l'inertisation et du stockage dans une déchetterie contrôlée d'inertisés.

Les dispositions légales et les différentes tendances industrielles ainsi que les coûts de traitements alternatifs obligent à un recyclage de ces matériaux dans les propres fours qui les produisent.

On connaît déjà le produit recyclé de poussière d'aciérie, en le réintroduisant une fois traité dans le four à arc électrique accompagnant la poussière d'aciérie (des oxydes en grande partie) avec un réducteur à base de carbone réduit en particules de sorte que chaque particule de poussière d'aciérie et chaque particule de composé réducteur s'enveloppent les unes aux autres formant un solide tenace au moyen d'un agglomérant, le solide ayant une forme et un volume indéterminés comme des billes, des ovoïdes, des prismes (briquettes) etc.

On connaît le procédé suivant:
a) on mélange de la poussière d'aciérie composée de: oxydes de fer 20 ÷ 50% ; oxyde de calcium 2 ÷9 % ; oxyde de zinc 10 ÷ 45 % ; oxydes de plomb 4 ÷ 15 % et en particules d'une dimension inférieure à 150 µ, dans un batteur d'homogénéisation ;
b) à un composé réducteur à base de carbone d'une pureté 80 ÷ 98 %, en particules d'une dimension inférieure à 200 µ y
c) et un polysaccharide polymérisable de nature agglomérante, étant présents dans le mélange du batteur et en poids dans le composé réducteur à 12 ÷ 20 %, l'agglomérant à 1'5 ÷ 4 % et le reste de poussière d'aciérie.

Le résultat final est une briquette.

L'apport énergétique du composé réducteur C doit servir dans le four pour obtenir la vaporisation du Zn et Pb et produire le mécanisme complexe physico-chimique, sans besoin de prendre de la chaleur au système mais au contraire en apportant de l'énergie au four. Cependant un tel procédé et la briquette présentent de graves problèmes.

La densité d'agglomérant organique (polysaccharide) est très inférieure à la densité de la poussière d'acier, d'où le fait que la présence d'agglomérant organique dans une proportion en poids de 1'5 ÷ 4% suppose un volume important qui a un effet très négatif sur le volume restreint de l'intérieur du four où les briquettes sont destinées.

Un autre problème réside dans l'odeur pénétrante du polysaccharide agglomérant qui touche tant le procédé que la briquette finale même lors de son stockage, manipulation ou destination finale.

De plus, selon le procédé utilisé actuellement, le processus n'est pas continu, avec une fabrication par lots de briquettes, tout le processus étant excessivement long.

Enfin il faut souligner le manque d'homogénéité de la briquette.

Tous ces problèmes peuvent être résolus avec les améliorations développées dans cette invention.

L'invention utilise comme agglomérant un polyalcool ou un mélange de polyalcools polymérisables dans une proportion en poids par rapport au total de 0'03 ÷ 0,07%, c'est à dire, entre 20 et 130 fois moins que celui proposé dans le procédé connu et cité, ce qui permet un volume très inférieur à celui utilisé actuellement.

On ajoute de l'eau au batteur pour former avec le polyalcool une pellicule de gel sur les particules, permettant lors de la polymérisation l'assemblage des particules de poussière d'acier au moyen d'une très fine couche polymérique et obtenant une briquette moins volumineuse et plus homogène que celle connue actuellement.

Dans le batteur, la polymérisation est accélérée en soumettant le mélange à une température de 30 ÷ 70° C, permettant de diminuer la durée du processus et la possibilité d'une fabrication de briquettes en continu et non plus en lots comme avant.

Au moyen de l'introduction du produit final (briquettes autoréductrices) dans le four d'acier, on obtient une réduction importante du volume total de poussière. Ce matériau ainsi obtenu au moyen de l'application du procédé pyrométallurgique décrit dans ce document a des caractéristiques bien différentes de la poussière d'origine et de ce que l'on appelle les "oxydes Recumet" (oxydes provenant du recyclage de métaux). Ce matériau, en raison de ses caractéristiques, peut être utilisé comme matière première dans l'industrie métallurgique de zinc et de plomb après application d'un processus hydrométallurgique ou minier.

Pour mieux comprendre l'objet de la présente invention, une forme choisie de réalisation pratique est représentée sur les plans, susceptible de changements accessoires qui ne modifieront pas son fondement.

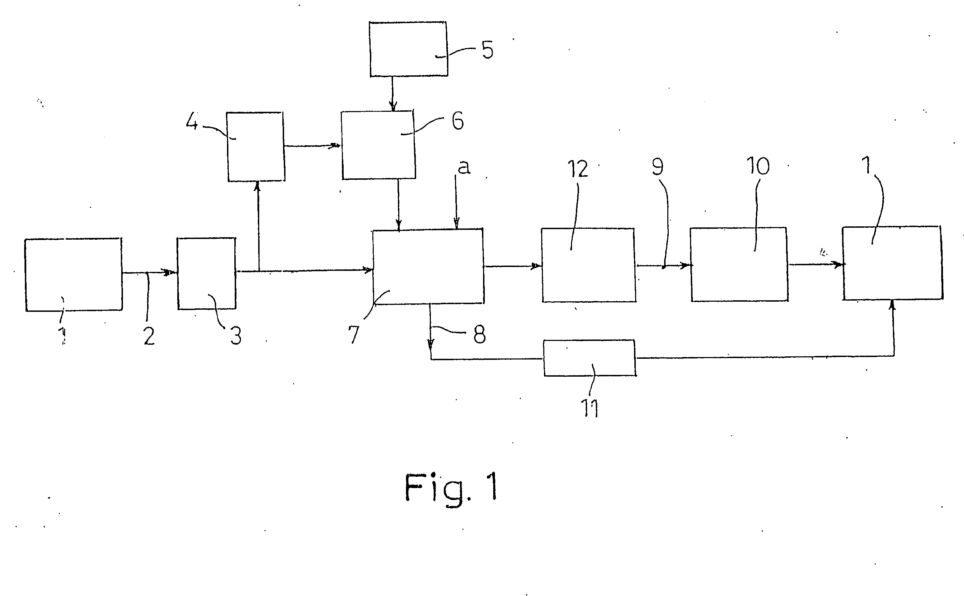

La figure 1 est une représentation schématique du procédé connu avec les solutions objet de l'invention.

Un exemple de réalisation pratique du procédé déjà connu et des solutions apportées par l'invention est décrit ci-dessous.

Des poussières (2) provenant des systèmes de captage de fumée se détachent d'un four à arc électrique (aciérie) (1).

Ces poussières (2) ont approximativement la composition suivante en poids pour les principaux composants :

| | |
|---|---|
| Fe0 + Fe₂ 0₃ | 20 ÷ 50% |
| Ca0 | 2 ÷ 9% |
| Zn0 | 10 ÷ 45% |
| Pb0 | 4 ÷ 15 % |

et ce en fonction de chaque aciérie.

La poussière (2) passe dans un silo (3) où elle se sédimente.

La dimension des particules de poussière (2) est inférieure à 150 µ et normalement inférieure à 50 µ avec une densité apparente (d₁) de 0'6 ≤ d₁ ≤ 0'7 g/cm³.

Le bloc d'analyse (4) indiquera la dimension des particules de poussière et le % d'oxydes de Fe.

On dispose d'une trémie avec un réducteur (5) avec une base de carbone, anthracite ou coke par exemple avec 80 ÷ 98 % de carbone.

L'objectif est que les particules de poussière d'aciérie (2) et les particules de réducteur (5) s'enveloppent les unes aux autres ; pour cela, le bloc d'analyse (4) donne des instructions au moulin (6) pour qu'il triture le produit réducteur (5) en particules d'une dimension (1) 1 ≤ 200 µ et de préférence de taille similaire à celle des particules de poussière d'aciérie (2) à ce moment précis du procédé.

Les fonctions du carbone du réducteur (5) quand le produit final est introduit dans le four à arc électrique sont les suivantes :

On considère que le carbone introduit comme réducteur dans le produit final se consume d'abord pour extraire tout l'oxygène des oxydes métalliques de ce produit, une autre partie importante se consume dans la réduction du CO2 formé se transformant en CO et avec l'excédent d'oxygène dans le four en pleine fonte, tout le gaz formé finit par brûler, ainsi que le reste de charbon apporté par l'oxygène. Ces combustions sont réalisées au moyen de la fusion de ferrailles lui apportant la chaleur.

De manière expérimentale et avec les compositions de poussières d'acier soulignées, on arrive à la conclusion que le réducteur (5) doit être ajouté dans une proportion en poids de 12 ÷ 20 %.

Le réducteur (5) et la poussière d'aciérie (2) sont mélangés dans un batteur (7) où est ajouté un agglomérant (a), des particules de poussière d'aciérie (2) et le réducteur (5).

Cet agglomérant (a) est à base de polyalcool et de polymérisable, par exemple un polysaccharide capable de donner une grande solidité au produit final, faciliter sa manipulation sans se casser et n'interférant pas négativement dans le processus de l'aciérie, étant préférable par exemple qu'il ne contienne pas de souffre (S) ou de phosphore (P).

Compte tenu que le volume de la briquette finale est un facteur déterminant dans son utilisation finale, le pourcentage en poids du ou des polyalcools servant d'agglomérant doit être de 0'03 ÷ 0'07%.

De l'eau est ajoutée au mélange.

Le mélange dans le batteur (7) produit des billes ou pellets (8) qui augmentent de volume par accumulation de matière plus la durée (t) de l'homogénéisation dans le batteur (7) est longue.

Si le produit final doit servir pour être introduit dans l'aciérie (1), la dimension (1) adaptée à ces pellets est de 0'5 mm ≤ 1 ≤ 6 mm, d'où le fait que l'homogénéisation dans le batteur (7) sera d'une durée (t) 2 ≤ t ≤ 6 minutes. L'intérieur du mélange (7) est soumis à une température de 30 ÷ 70° C puis est soumis à un séchage postérieur (11).

Le sollicitant juge plus convenable d'obtenir comme produit final des briquettes (9) d'un volume (V) : 50 cm³ ≤ V ≤ 600 cm³, procédant pour se faire à un pressage (12) du mélange provenant du batteur (7) pour obtenir une densité (d) du produit : 2 ≤ d ≤ 3'3 g/cm³.

Une fois cette densité obtenue, le produit (9) en forme de briquette ou autre est soumis à une phase de séchage (10) conventionnelle selon l'agglomérant polymérisable utilisé.

La briquette (10) stabilisée est introduite dans l'aciérie (1) avec des résultats optimums.

### Exemple :

Pour la fabrication de ces briquettes, la formule suivante a été appliquée (sans inclure l'eau ajoutée) :
- Poussière d'aciérie 81'95%
- Réducteur 18 %
- Polyalcool 0'05 %

Composition de la poussière d'aciérie % (en poids).

| | |
|---|---|
| Fe0 | 9'00 |
| Fe203 | 30'60 |
| Si02 | 4'38 |
| AI203 | 0'79 |
| Ca0 | 5'87 |
| Mg0 | 4'49 |
| Mn0 | 3,42 |
| Ti02 | 0'07 |
| P205 | 0'20 |
| S | 0'19 |
| C | 0'73 |
| Na20 | 2'00 |
| K20 | 1'82 |
| Cr203 | 0'48 |
| Ni0 | 0'04 |
| Cu0 | 0'30 |
| Zn0 | 22'70 |
| Pb0 | 6'65 |
| Cd0 | 0'06 |
| P.C. | 11'04 |

dimension des particules (1): 30≤1≤70 µ
- Réducteur

Poussière de coke avec une granulométrie moyenne de (1): 1 ≃ 60 µ pour que les réactions de réduction-oxydation se développent à la vitesse requise.

| | |
|---|---|
| Cendres | 10 % |
| Volatiles | 1'3 % |
| Carbone fixe | 89'7 % |
| S | 0'65 % |

- Agglomérant.

Un polymérisable à base de polyalcool complexé.
- Résultats obtenus dans l'aciérie (1).

Sur 1 T de briquettes réductrices
- Métaux fondus.
   Récupération totale 250 Kg/T
   - 91 %Fe
   - 8'5 % Mn
   - 0'5 % Reste
- Métaux volatilisés.
   Volatilisation de métaux 196 Kg/T
   - 74'3 % Zn
   - 25'2 % Pb
   - 0'5 % Reste

On note un apport énergétique des briquettes dans le processus de l'aciérie, cet apport calorique se comportant comme si un briquet était introduit dans le four.

Dû à la disposition spatiale des particules de la poussière d'aciérie et de carbone réducteur (s'enveloppant les unes aux autres), la vitesse de réaction se multiplie et des produits finaux (briquettes) d'une dimension très supérieure aux pellets ont un temps de réduction similaire dans le four.

On obtient en d'autres termes une récupération totale du Fe de la poussière, une bonne manipulation des pellets et des briquettes et un bon équilibre énergétique quand le produit final est à nouveau introduit dans le four.

## Revendications

1. Procédé de recyclage de poussière d'acier **caractérisé par le fait que:**
a) on mélange de la poussière d'aciérie composée d'oxydes de fer 20 à 50% ; oxyde de calcium 2 à 9 % ; oxyde de zinc 10 à 45 % ; oxydes de plomb 4 à 15 % et en particules d'une dimension inférieure à 150 µ, dans un batteur d'homogénéisation ;
b) à un composé réducteur à base de carbone d'une pureté 80 à 98% et en particules d'une dimension inférieure à 200 µ, et
c) et un agglomérant à base de polyalccol polymérisable et de l'eau présents dans le mélange du batteur et dans le poids du composé réducteur à 12 à 20 %, l'agglomérant à 0'03 à 0'07 % et le reste de poussière d'acier.

2. Procédé de recyclage de poussière d'acier, selon la revendication précédente, **caractérisé par le fait que** le mélange s'homogénéise dans le batteur pendant 2 à 6 minutes, soumis à une température de 30 à 70° C, formé ensuite en billes puis séché.

3. Procédé de recyclage de poussière d'aciérie, selon la première revendication, **caractérisé par le fait que** le mélange du batteur une fois homogénéisé est soumis à un pressage pour obtenir une densité comprise entre 2 et 3'3 g/cm³ puis soumis à un séchage.

4. Procédé de recyclage de poussière d'aciérie, selon la première revendication, **caractérisé par le fait que** les particules du composé réducteur sont de taille similaire aux particules de la poussière d'acier.

5. Procédé de recyclage de poussière d'aciérie, selon la première revendication, **caractérisé par le fait que** l'agglomérant organique est polymérisable, produisant une polymère de nature solide.

6. Produit obtenu avec le procédé des revendications précédentes, **caractérisé par le fait que** chaque particule de poussière d'aciérie et chaque particule de composé réducteur s'enveloppent les unes aux autres en un solide tenace au moyen d'une fine pellicule d'agglomérant polymérisé.

## Claims

1. Steel dust recycling process **characterized by**:
a) a steel dust with the following composition: iron oxides 20 - 50%; calcium oxide 2 - 9 %; zinc oxides 10 - 45 %; lead oxide 4 - 15 % in particulates smaller than 150 µ, is mixed in a homogenizer;
b) with a carbon based reducing compound having a carbon purity of 80 - 98 % and in particulates smaller than 200 µ and
c) with a polymerizable polyalcohol and water based bonding agent present in the mixture, the proportions being the reducing compound with 12 - 20 %, the bonding agent with 0'03 - 0'07 % and the remainder, steel dust.

2. Steel dust recycling process, as defined in claim 1, wherein the mixture is blended in the homogenizer between 2 and 6 minutes, subjected to a temperature of 30 - 70°, removed in the form a small balls and forwarded to the curing process.

3. Steel dust recycling process, as defined in claim 1, wherein once the mixture has been homogenized, it is subjected to pressing until it reaches a density of between 2 and 3'3 gr./cm³ after which it undergoes curing.

4. Steel dust recycling process, as defined in claim 1, wherein the reducing compound particulates are similar in size to those of the steel dust.

5. Steel dust recycling process, as defined in claim 1, wherein the organic bonding agent is polymerizable, originating a tenacious polymer.

6. Product obtained with the processes previously claimed, wherein each particulate of steel dust and each particulate of reducing compound are surrounded mutually and spatially in tenacious solid by means of a fine film of polymerized bonding agent.

## Patentansprüche

1. Verfahren für das Recyceln von Hüttenwerkstaub, **dadurch gekennzeichnet, dass**:
a) Hüttenwerkstaub mit einer Zusammensetzung von Eisenoxid zu 20 ÷ 50%, Luftkalk zu 2 ÷9 %, Zinkoxid zu 10 ÷ 45 % und Bleioxid zu 4 ÷ 15 % in Partikeln in der Grössenordnung von unter 150µ in einer Homogenisierungsmischmaschine
b) mit einer Reduktionsmischung auf der Basis von Kohlenstoff mit einer Reinheit des Kohlenstoffs von 80 ÷ 98 % und in Partikeln in einer Grösse von unter 200 µ und
c) einem Bindemittel auf der Basis von polimerisierfähigem Polialkohol und Wasser gemischt wird, wobei in der Mischung der Mischmaschine und im Gewicht die Reduktionsmischung von 12 ÷ 20 % und das Bindemittel mit 0'03 ÷ 0'07 % enthalten sind und der Rest aus Hüttenwerkstaub besteht.

2. Verfahren für das Recyceln von Hüttenwerkstaub nach dem ersten Anspruch, **dadurch gekennzeichnet, dass** die Mischung in der Mischmaschine innerhalb von 2 bis 6 Minuten polimerisiert wird, dieselbe im Anschluss daran einer Temperatur von 30 ÷ 70° C ausgesetzt wird, danach in kleinen Kügelchen herausgenommen und schliesslich gehärtet wird.

3. Verfahren für das Recyceln von Hüttenwerkstaub nach dem ersten Anspruch, **dadurch gekennzeichnet, dass** die Mischung in der Mischmaschine im Anschluss an die Homogenisierung bis zum Erhalt einer Dichte von 2 und 3,3 g/cm³ gepresst und daran anschliessend gehärtet wird.

4. Verfahren für das Recyceln von Hüttenwerkstaub nach dem ersten Anspruch, **dadurch gekennzeichnet, dass** die Partikel der Reduktionsmischung von einer ähnlichen Grösse wie die Partikel des Hüttenwerkstaubs sind.

5. Verfahren für das Recyceln von Hüttenwerkstaub nach dem ersten Anspruch, **dadurch gekennzeichnet, dass** das organische Bindemittel poilimerisierfähig ist und ein strengflüssiges Polymer produziert.

6. Ein durch dem Einsatz der in den vorangegangenen Ansprüchen beschriebenen Verfahren erzeugtes Produkt, **dadurch gekennzeichnet, dass** jedes Partikel des Hüttenwerkstaubs und jedes Partikel der Reduktionsmischung untereinander und räumlich von einem feinen Film des polimerisierten Bindemittels umgeben sind.
